# EUROPÄISCHE PATENTSCHRIFT

(11) **EP 1 325 250 B1**
(45) Veröffentlichungstag und Bekanntmachung des Hinweises auf die Patenterteilung: **01.12.2004**
(21) Anmeldenummer: 01985742.4
(22) Anmeldetag: 12.09.2001
(51) Int. Cl.: F16H 47/04

(54) **HYDROSTATEINRICHTUNG FÜR EIN HYDROSTATISCH-MECHANISCHES LEISTUNGSVERZWEIGUNGSGETRIEBE**
HYDROSTATIC DEVICE FOR A HYDROSTATIC-MECHANICAL POWER-SPLIT TRANSMISSION
DISPOSITIF HYDROSTATIQUE POUR ENGRENAGE DE DERIVATION DE PUISSANCE HYDROSTATIQUE-MECANIQUE

(30) Priorität: 26.09.2000 DE 10047402
(43) Veröffentlichungstag der Anmeldung: 09.07.2003
(73) Patentinhaber: DEERE & COMPANY, Moline, Illinois 61265-8098 (US)
(72) Erfinder: OTTEN, Ulrich, 67346 Speyer (DE)
(74) Vertreter: Lau-Loskill, Philipp, Dipl.-Phys.
(86) Internationale Anmeldenummer: PCT/EP2001/010508
(87) Internationale Veröffentlichungsnummer: WO 2002/027215

(56) Entgegenhaltungen:
- EP-A- 0 465 752
- DE-A- 3 624 989
- GB-A- 804 325
- GB-A- 897 087

## Beschreibung

Die Erfindung betrifft die Hydrostateinrichtung für ein hydrostatisch-mechanisches Leistungsverzweigungsgetriebe eines landwirtschaftlichen oder industriellen Nutzfahrzeugs mit einem Montagerahmen, in dem die parallel zueinander ausgerichteten Wellen wenigstens zweier Hydrostaten über Lagereinheiten drehbar gelagert sind und an dem sich die Verstelleinrichtungen der Hydrostaten abstützen. Bei den Hydrostaten handelt es sich um einen Hydrostatmotor und eine Verstellpumpe, die hydraulisch miteinander in Verbindung stehen. Aus der GB-A-897 087 ist eine Hydrostateinrichtung mit den Merkmalen des Oberbegriffes des Anspruches 1 bekannt.

Der Einsatz leistungsverzweigter Getriebe ist bei stufenlosen Antriebssystemen von Nutzfahrzeugen vorteilhaft, da sie den hohen Anforderungen an eine günstige Verlustleistung gerecht werden können. Bei leistungsverzweigten Getrieben wird ein Teil der Leistung des Verbrennungsmotors über einen stufenlosen Getriebezweig und der andere Teil der Leistung über einen konstanten, mechanischen Getriebezweig geführt. Beide Leistungsflüsse werden nach Durchlaufen der Getriebezweige überlagert und wieder zusammengeführt und anschließend über mechanische Antriebselemente zu den Rädern weitergeleitet.

Der stufenlose Getriebezweig wird zumeist mit einem hydrostatischen Getriebe ausgeführt, deren Hydrostaten eine hydraulische Verstellpumpe und ein Konstantmotor sind. In einigen Fällen wird an Stelle des Konstantmotors ebenfalls eine Verstelleinheit verwendet.

Bei den meisten bekannten hydrostatisch-mechanischen Leistungsverzweigungsgetrieben für Arbeitsfahrzeuge werden im Handel erhältliche, in Serie hergestellte hydrostatische Pumpen und Motoren verwendet, welche mit ihren dem jeweiligen Wellenaustritt abgewandten Seiten Rücken an Rücken (back-toback) zueinander angeordnet sind und sich zumeist räumlich neben einem Planetengetriebe in einem gemeinsamen Getriebegehäuse befinden (DE 40 21 686 A1). Bei dem Planetengetriebe kann es sich um eine sogenannte Planetenwalze handeln. Diese besteht aus einem Summierungsgetriebe und einer Anzahl weiterer Planetengetriebe, die hintereinander geschaltet und deren Komponenten für die Umschaltung zwischen unterschiedlichen Übersetzungsverhältnissen durch Kupplungen und Bremsen miteinander verknüpfbar sind.

In der EP 0 465 752 A1 werden mehrere stufenlose Gangschaltmechanismen mit jeweils einem hydrostatischen Getriebe beschrieben, das eine Hydraulikpumpe und einen Hydraulikmotor aufweist. Der Hydraulikmotor und die Verstellpumpe stehen über einen Hydraulikkreis miteinander in Verbindung. Sie können getrennt voneinander oder in einem gemeinsamen Gehäuse untergebracht sein und sind an einem Getriebegehäuse angeflanscht. Ihre beiden Wellen sind parallel zueinander ausgerichtet und ragen in das Getriebegehäuse hinein, wo sie mit einem mechanischen Summierungsgetriebe und einem konventionellen Schaltgetriebe in Verbindung stehen. Für jeden dargestellten Gangschaltmechanismus ist ein eigens hierauf angepasstes hydrostatisches Getriebe vorgesehen.

Aus der DE-A-36 24 989 geht ein Getriebe mit hydraulischen und mechanischen Komponenten zum Antrieb von Kraftfahrzeugen hervor, bei dem die Hydrostatmaschinen mit einem Steuer- und Verbindungsblock als vormontierbare Einheit fest miteinander verbunden sind. Die vormontierbare Einheit ist mit einem Planetengetriebe, diversen Kupplungen und einer Zwischenwelle gesamtheitlich in einem gemeinsamen Gehäuse angeordnet, wobei die Hydrostatmaschinen in der Einbaulänge des Planetengetriebes und achsparallel zu diesem angeordnet sind, wodurch der Bauraum sowie der Geräuschpegel klein gehalten werden sollen.

Bei hydrostatisch-mechanischen leistungsverzweigten Getrieben nehmen die hydrostatischen Komponenten von Verstellpumpe und Konstantmotor einen großen Wertschöpfungsanteil ein. Zumeist ist der Getriebehersteller von leistungsverzweigten Getrieben nicht Hersteller von hydrostatischen Komponenten. Damit die Gesamtkosten für ein hydrostatisch-mechanisches Getriebe vergleichbar mit denen von Lastschalt-Stufengetrieben oder Vollast-Stufengetrieben bleiben, ist der Getriebehersteller bestrebt, möglichst kleine, und damit leistungsschwache Hydrostateinheiten zu wählen. Hierdurch kann es jedoch notwendig werden, die Anzahl der Bauteile im mechanischen Getriebeteil stark zu steigern, was wiederum zu Mehrkosten führt.

Die Anordnung und Auswahl der Hydrostaten muss auf den jeweiligen mechanischen Zweig (Planetenwalze) abgestimmt werden. Dabei ist es von besonderer Bedeutung, ob die Leistungsverzweigung am Eingang des mechanischen Zweigs ("torque split") oder am Ausgang des mechanischen Zweigs ("speed split") vorgenommen wird, oder ob der mechanische Zweig zwischen den beiden Hydrostaten liegt ("compound"). Des weiteren wäre eine Trennung des Ölkreislaufs für die Hydrostaten von dem Schmierkreislauf wünschenswert, was jedoch einen erheblichen konstruktiven Aufwand erfordert. Auch die Geräuschisolierung gegenüber dem Getriebegehäuse ist nur schwer und kostenintensiv möglich.

Die der Erfindung zugrunde liegende Aufgabe wird darin gesehen, eine Hydrostateinrichtung der eingangs genannten Art derart auszubilden, dass die vorgenannten Probleme überwunden werden. Insbesondere soll eine Hydrostateinrichtung bereitgestellt werden, die vielseitig anwendbar und damit in hohen Stückzahlen kostengünstig herstellbar ist. Es soll möglich sein, für die Hydrostaten einen eigenen Hydraulikkreislauf vorzusehen und die Geräuschübertragung auf das Getriebegehäuse gering zu halten.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Hydrostateinrichtung enthält einen Montagerahmen, an dem sich über Lagereinheiten die Wellen wenigstens zweier Hydrostaten drehbar abstützen. An dem Montagerahmen sind auch die hydraulischen Verbindungskreise mit Joch, Hydraulikleitungen, Ventilen und dergleichen sowie die Verstelleinrichtungen der Hydrostaten befestigt. Die Hydrostaten brauchen hierbei kein eigenes Hydrostatgehäuse aufzuweisen. Als besonders geeignet werden Schrägachsenmaschinen angesehen, die einen großen Schwenkwinkel und ein großes Fördervolumen aufweisen. Sie ermöglichen eine kompaktere Bauweise als Schrägscheibenmaschinen. Wenigstens ein als Verstellpumpe ausgebildeter Hydrostat ist verschwenkbar an dem Montagerahmen montiert, während ein weiterer als Konstantmotor ausgebildeter Hydrostat fest auf dem Montagerahmen montiert sein kann. An Stelle eines Konstantmotors kann jedoch auch ein beweglich montierter Verstellmotor verwendet werden.

An dem Montagerahmen stützt sich des weiteren über wenigstens eine Lagereinheit eine mit der Verstellpumpe antriebsmäßig in Verbindung stehende Eingangswelle der Hydrostateinrichtung drehbar ab. Es sind wenigstens zwei parallel zueinander ausgerichtete, sich über jeweils wenigstens eine Lagereinheit am Montagerahmen abstützende Ausgangswellen vorgesehen. Wenigstens eine Ausgangswelle wird mechanisch, unmittelbar oder mittelbar (z. B. über eine Räderkette oder eine Steckverbindung) durch die Eingangswelle, und wenigstens eine weitere Ausgangswelle wird hydraulisch, unmittelbar oder mittelbar (z. B. über eine Räderkette oder eine Steckverbindung) durch die Verstellpumpe, angetrieben.

Der Montagerahmen dient damit der Befestigung der Hydrostaten und zur Abstützung für die Eingangswelle und die Ausgangswellen. Er ist gemeinsam mit den Hydrostaten, den zugehörigen Hydraulikkreisen und Verstelleinheiten, sowie der Eingangswelle, den Ausgangswellen und den Lagereinheiten als vormontierbare, für sich funktionsfähige Hydrostatbaueinheit ausgebildet, welche unabhängig von weiteren Getriebeeinheiten getestet werden kann.

Die Anordnung der Eingangswelle, der Konstantmotorwelle, der Verstellpumpenwelle und der Ausgangswellen auf einem Montagerahmen erlauben es, dass eine erfindungsgemäß ausgebildete Hydrostateinrichtung auf vielfältige Weise als Getriebemodul in Fahrzeugantriebssträngen zur Darstellung von stufenlosen hydrostatisch-mechanischen leistungsverzweigten Antriebskonzepten eingesetzt werden kann. Die Hydrostateinrichtung liefert an verschiedenen Ausgangswellen hydrostatische oder mechanische Leistung zur Weiterleitung in den mechanischen Getriebezweig des Gesamtgetriebes, insbesondere in eine Planetenwalze. Sie liefert auch mechanische Leistung zur Weiterleitung an mechanische Leistungsverbraucher wie Zapfwelle, Luftpumpen, Ölpumpen und Lichtmaschine. Es versteht sich, dass bei einer universell einsetzbaren Hydrostateinrichtung nicht bei jedem Anwendungsfall alle ihre Ausgangswellen genutzt werden müssen.

Ein konkreter erfindungsgemäß ausgebildeter Getriebemodul kann wahlweise an alle bekannten Arten von Planetengetriebestrukturen, wie "torque split", "speed split" und "compound" angeschlossen werden, ohne grundlegende Konstruktionsänderungen vornehmen zu müssen. Damit kann für eine erfindungsgemäß ausgebildete Hydrostateinrichtung ein weiter Einsatzbereich für verschiedene Anwendungsfälle in unterschiedlichen Nutzfahrzeugen (Baumaschinen, Traktoren, selbstfahrende Arbeitsmaschinen wie landwirtschaftliche Erntemaschinen und Sprühfahrzeuge und v. m.) gewährleistet werden. Durch die vielseitige Anwendbarkeit lässt sich die Hydrostateinrichtung in hohen Stückzahlen und damit preisgünstig herstellen.

Es hat sich als besonders vorteilhaft erwiesen, die erfindungsgemäße Hydrostateinrichtung mit relativ leistungsstarken Hydrostateinheiten zu bestücken. Damit kann ein konkreter Hydrostatmodultyp bei allen Getrieben einer Getriebeserie, die einen weiten Leistungsbereich überdeckt, eingesetzt werden. Diese großen Hydrostaten können relativ langsam und damit bei günstigem Wirkungsgrad laufen. Für die Bereitstellung eines Getriebes kleiner Leistung müssen im mechanischen Zweig des Gesamtgetriebes nur relativ wenige Umschaltbereiche vorgesehen werden, was Kostenvorteile mit sich bringt. Getriebe höherer Leistung lassen sich unter Verwendung des gleichen Hydrostatmodultyps durch die Bereitstellung weiterer Umschaltbereiche im mechanischen Getriebezweig realisieren. Für die Bereitstellung einer Vielzahl von Getriebevarianten mit unterschiedlichen Leistungsklassen ergeben sich durch die erfindungsgemäße Hydrostateinrichtung erhebliche Kostenvorteile.

Bei einem modular aufgebauten Getriebe ist es günstig, wenn die einzelnen Getriebekomponenten im wesentlichen in Achsrichtung hintereinander angeordnet sind. Hierbei kann es von Vorteil sein, wenn sich durch den Montagerahmen, auf dem das Hydrostatmodul aufgebaut ist, wenigstens ein Wellenabschnitt einer durch eine Antriebsmaschine (Verbrennungsmotor) angetriebenen Getriebeeingangswelle erstreckt. Die Getriebeeingangswelle kann als Eingangswelle der Hydrostateinrichtung dienen und sich über eine Lagereinheit an dem Montagerahmen abstützen. Sie kann auch mit der Eingangswelle der Hydrostateinrichtung fluchten und mit dieser drehfest verbunden sein.

Neben diesen Ausgestaltungen kann es jedoch auch vorteilhaft sein, wenn sich die Getriebeeingangswelle frei durch den Montagerahmen des Hydrostatmoduls, beispielsweise innerhalb einer Hohlwelle, erstreckt und wenn sie ihre Antriebsleistung zunächst an den mechanischen Zweig des Gesamtgetriebes liefert. Hierbei ist es von Vorteil, wenn die Eingangswelle der Hydrostateinrichtung mit einer Ausgangswelle des mechanischen Getriebezweigs, insbesondere der Ausgangswelle einer modularen Planetengetriebebaueinheit, verbindbar ist. Es kann auch zweckmäßig sein, die Eingangswelle der Hydrostateinrichtung als Hohlwelle auszubilden und konzentrisch zu einer innerhalb dieser Hohlwelle verlaufenden durch einen Antriebsmotor angetriebenen Getriebeeingangswelle anzuordnen.

Die Getriebeeingangswelle kann bei allen Getriebevarianten gleichzeitig auch für einen Zapfwellenantrieb genutzt werden.

Eine bevorzugte Ausgestaltung der Erfindung sieht vor, dass die sich an dem Montagerahmen abstützende Eingangswelle der Hydrostateinrichtung über eine Räderkette mit der Welle der Verstellpumpe in Verbindung steht. Die Räderkette, die beispielsweise aus einem Eingangswellenzahnrad und einem Verstellpumpenzahnrad besteht, ist Teil der vormontierbaren Hydrostatbaueinheit.

Für eine kompakte Bauweise ist es von Vorteil, wenigstens eine Ausgangswelle der Hydrostateinrichtung als Hohlwelle auszubilden. Diese Hohlwelle verläuft beispielsweise koaxial zur Eingangswelle und ist gegenüber dieser verdrehbar. Sie besitzt eine hydrostatische Leistung, welche einer Planetenwalze zugeführt wird. Die Leistung kann auch an ein der Hydrostateinrichtung nachgeordnetes Gruppengetriebe abgegeben werden, falls ein rein hydrostatisches stufenloses Getriebe ausgeführt werden soll.

Vorzugsweise sind die Eingangswelle und die Ausgangswellen parallel zu den Wellen der Hydrostaten ausgerichtet. Die Anschlüsse (z. B. Anschlussflansche oder Steckverbindungen) der Eingangswellen einerseits und Ausgangswellen andererseits können auf einer Seite oder auf entgegengesetzten Seiten der Hydrostateinrichtung liegen. Alle Ausgangswellen treten zweckmäßigerweise auf einer Seite der Hydrostateinrichtung aus.

Es kann vorteilhaft sein, eine Ausgangswelle koaxial zur Eingangswelle anzuordnen und beide Wellen drehfest miteinander zu verbinden (z. B. durch eine Steckverbindung). Damit wird die mechanische Leistung der Eingangswelle einerseits für die Hydrostateinheit genutzt und andererseits durch die Hydrostateinheit hindurchgeführt. Die durchgeleitete Leistung kann beispielsweise einer Planetenwalze und/oder weiteren Leistungsverbrauchern, wie ein Zapfwellenantrieb, zugeführt werden.

Gemäß einer weiteren bevorzugten Ausgestaltung der Erfindung ist die Welle eines Hydrostaten (Konstantmotor oder Verstellpumpe) über eine Räderkette mit einer Ausgangswelle verbunden. Die Räderkette, die beispielsweise aus einem auf der Hydrostatwelle montiertem Zahnrad und einem auf der Ausgangswelle montiertem Zahnrad besteht, ist Teil der vormontierbaren Hydrostatbaueinheit.

Ergänzend oder alternativ hierzu ist es von Vorteil wenigstens eine Ausgangswelle koaxial zu der Welle eines Hydrostaten anzuordnen und drehfest mit dieser zu verbinden. Damit ist es beispielsweise möglich, die an der Hydrostatmotorwelle anstehende hydrostatische Leistung unmittelbar an einer zu dieser Welle koaxialen Ausgangswelle abzunehmen und einer Planetenwalze zuzuführen. Es kann auch die Welle einer als Verstellpumpe ausgebildeten Hydrostaten mit einer koaxialen Ausgangswelle drehfest verbunden sein, an die zusätzliche Leistungsverbraucher anschließbar sind, welche mit einem konstanten Verhältnis zur Verbrennungsmotordrehzahl angetrieben werden sollen. Diese Verbraucher können zum Beispiel Getriebeölpumpen, Luftpumpen oder elektrische Maschinen (Lichtmaschinen) sein. Die mit der Verstellpumpe verbundene Ausgangswelle kann auch eine weitere hydrostatische Verstellpumpe antreiben, deren variables Ölvolumen einer hydrostatischen Konstantpumpe zugeführt wird, welche einen stufenlos verstellbaren Frontantrieb des Nutzfahrzeugs antreibt.

Für eine einfache Montage ist es von besonderem Vorteil, die Eingangswelle und/oder die Ausgangswellen mit verzahnten Steckverbindungen zur drehfesten Verbindung mit benachbarten Komponenten des Antriebsstrangs zu versehen, durch welche formschlüssige Verbindungen mit entsprechenden Wellen des mechanischen Getriebezweiges, insbesondere einer Planetenwalze, hergestellt werden können. Die verzahnten Steckverbindungen (Steckflansche) ermöglichen Ausgleichsbewegungen zwischen der Hydrostateinrichtung und den angeschlossenen Getriebekomponenten. Bei der Getriebemontage ist es lediglich erforderlich die vormontierte Hydrostateinrichtung und eine vormontierte Getriebekomponente aufeinander zuzubewegen, bis die korrespondierenden Steckverbindungen ineinandergreifen, und dann die Getriebegehäuseflanschverbindungen herzustellen.

Die Hydrostatbaueinheit besitzt vorzugsweise eine Eingangswelle und bis zu vier Ausgangswellen.

Eine besonders bevorzugte Weiterbildung der Erfindung sieht vor, dass der Montagerahmen wenigstens ein Lagerungsbauteil und ein an diesem befestigbares Lagergehäuse aufweist. Die Wellen der Hydrostaten sowie gegebenenfalls die Eingangswelle und/oder die Ausgangswellen sind dabei sowohl in dem Lagerungsbauteil als auch in dem Lagergehäuse gelagert. Damit stützen sich die Wellen an zwei Stellen ab und können große Kräfte aufnehmen. Diese Maßnahme fördert die Ausbildung als eine für sich funktionsfähige Hydrostatbaueinheit, die sich als Modul in ein Getriebe einfügen lässt.

Es ist von Vorteil, in einem Zwischenraum zwischen dem Lagerungsbauteil und dem Lagergehäuse wenigstens eine Räderkette anzuordnen, die zur Drehmomentübertragung wenigstens die Eingangswelle mit der Welle eines als Verstellpumpe ausgebildeten Hydrostaten verbindet bzw. die zur Drehmomentübertragung wenigstens eine Ausgangswelle mit der Welle eines als Hydromotor ausgebildeten Hydrostaten verbindet. Bei dieser Anordnung werden die die Räderkette tragenden Wellen auf beiden Seiten des jeweiligen Zahnrades abgestützt, was einen stabilen Aufbau gewährleistet.

Des weiteren ist es zweckmäßig, wenn die erfindungsgemäße Hydrostateinrichtung Drehzahlsensoren enthält, durch welche die Drehzahl der Eingangswelle und/oder die Drehzahl wenigstens einer Ausgangswelle unmittelbar oder unter Zwischenschaltung eines oder mehrerer Zahnräder erfasst wird. Die in die Hydrostatbaueinheit integrierten Sensoren liefern Drehzahlen, die einem Getriebekontroller wichtige Stellgrößen zur Verstellung des stufenlosen Gesamtgetriebes zur Verfügung stellen.

Die Anordnung der hydraulischen Bauteile und der Eingangs- und Ausgangswellen auf einem Montagerahmen, der auch als Grundplatte oder als Getriebegehäusewand ausgebildet sein kann, erlaubt eine sehr einfache Konstruktion um Schwingungselemente anzuordnen, die insbesondere der Geräuschisolierung dienen. Es ist von Vorteil, für die Hydrostateinrichtung ein Getriebegehäuse vorzusehen, in welchem der Montagerahmen schwingungsdämpfend angeordnet ist. Der Montagerahmen stützt sich beispielsweise über drei oder vier auf dem Umfang verteilte Schwingungsdämpfer am Getriebegehäuse ab. Darüber hinaus kann sich gegebenenfalls auch eine Lagereinheit der Eingangswelle und/oder wenigstens eine Lagereinheit einer Ausgangswelle der Hydrostateinrichtung schwingungsdämpfend am Getriebegehäuse abstützen. Das Getriebegehäuse kann am Fahrzeugrahmen befestigbar sein.

Durch diese Maßnahme wird der Montagerahmen mit den wesentlichen Elementen der Hydrostatbaueinheit (Hydrostaten, Eingangs- und Ausgangswellen, Lagereinheiten, Räderketten) weitgehend von dem fahrzeugfesten Getriebegehäuse schwingungsmäßig entkoppelt, was zu einer Dämpfung von Körperschallwellen und zur Geräuschminderung führt. Die Schwingungsdämpfungselemente sind auf die Minimierung von Geräuschemissionen der Hydrostatbaueinheit ausgelegt. Geeignete Schwingungsisolationselemente sind im Handel erhältlich.

Für einen modularen Aufbau des Gesamtgetriebes ist es von Vorteil, den Montagerahmen in einem im wesentlichen hutförmig ausgebildeten, zu einer Seite offenen Getriebegehäuse zu montieren. Dabei ist die Getriebeeingangswelle im Bodenflansch des hutförmigen Getriebegehäuses gelagert und die freien Enden der Ausgangswellen liegen auf der offenen Getriebeseite.

Es ist auch zweckmäßig, das Getriebegehäuse so auszulegen, dass sein Innenraum bei zusammengebautem Gesamtgetriebe, z. B. durch den Flansch eines benachbarten Planetenwalzengetriebegehäuses, abgedichtet ist. Hierdurch lässt sich ein eigener Hydraulikkreislauf für die in dem Getriebegehäuse angeordneten Komponenten realisieren.

Die als funktionsfähiges Modul ausgebildete Hydrostateinheit enthält vorzugsweise auch eine eigene Hydraulikversorgung, gegebenenfalls mit Ölpumpe, Flüssigkeitsfilter und Kühler, durch die die Flüssigkeit aus dem Getriebebodenbereich über Filter zurückgeführt wird. Die Komponenten der Hydraulikversorgung können an dem Montagerahmen und/oder an dem Getriebegehäuse befestigt oder in diese integriert sein. Sie dienen der Aufrechterhaltung eines Flüssigkeitskreislaufs innerhalb des Getriebegehäuses, zum Aufladen des Niederdruckkreises des Hydrostaten, insbesondere zum Nachfüllen von Leckageverlusten, und als Schmierstofflieferant für die Lagereinheiten der Hydrostateinrichtung. Dies ergibt ein lebensfähiges Getriebemodul, das selbständig getestet werden kann. In diesem Hydraulikkreislauf kann eine optimierte Flüssigkeitssorte für die Hydrostateinrichtung verwendet werden.

Des weiteren ist es vorteilhaft, wenn wenigstens eine die Hydrostaten verbindende Hydraulikleitung kurbelförmig am Montagerahmen gelagert ist und eine Drehdurchführung enthält. Diese Hydraulikleitungen bilden in an sich bekannter Weise ein schwenkbares Joch.

Die Hydrostateinrichtung enthält des weiteren wenigstens eine Verstelleinrichtung, z. B. einen Elektromotor, durch den ein verstellbarer Hydrostat zur Einstellung des Schwenkwinkels um seine Schwenkachse verschwenkbar ist.

Anhand der Zeichnung, die mehrere Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Darstellung einer ersten erfindungsgemäßen Hydrostateinrichtung,
- Fig. 2: die schematische Darstellung einer zweiten erfindungsgemäßen Hydrostateinrichtung,
- Fig. 3: die schematische Darstellung einer dritten erfindungsgemäßen Hydrostateinrichtung,
- Fig. 4: die schematische Stirnansicht der Wellen einer erfindungsgemäßen Hydrostateinrichtung und
- Fig. 5 bis 7: vier schematische Darstellungen unterschiedlicher hydrostatisch-mechanischer Leistungsverzweigungsgetriebe mit jeweils einer erfindungsgemäßen Hydrostateinrichtung.

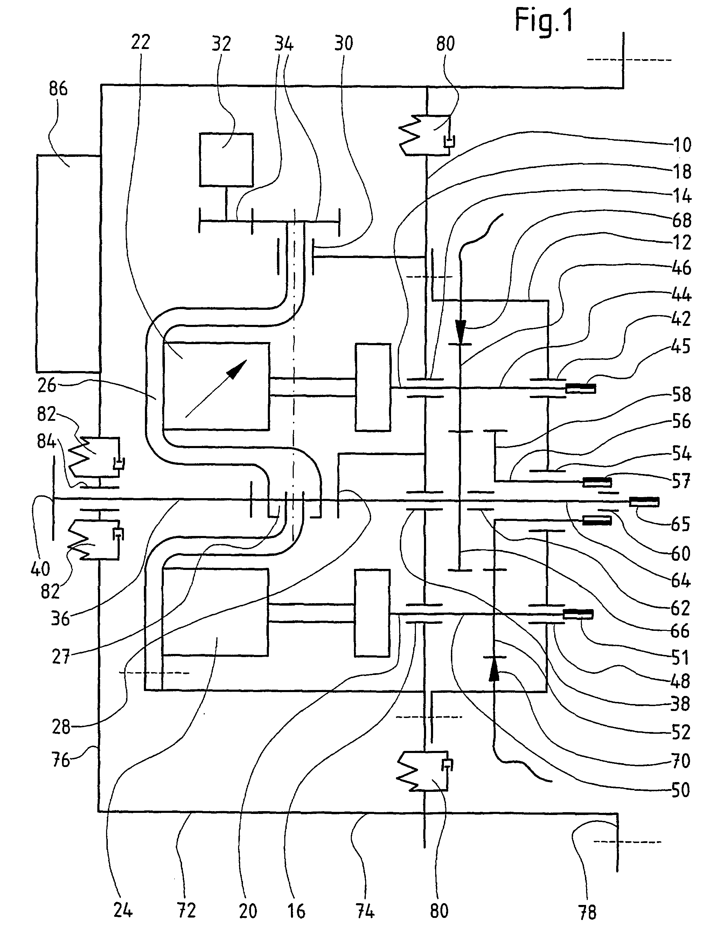

Die in Fig. 1 dargestellte Hydrostateinrichtung enthält einen zweiteiligen Montagerahmen, der im wesentlichen aus einem Lagerungsbauteil 10 und einem daran angeflanschten Lagergehäuse 12 besteht. Auch wenn das Lagerungsbauteil 10 und das Lagergehäuse 12 im wesentlichen lediglich als Linien dargestellt sind, handelt es sich tatsächlich um komplexe Bauteile, deren konkrete Ausgestaltung im Können eines Getriebekonstrukteurs liegt. In einem Zwischenraum zwischen dem Lagerungsbauteil 10 und dem Lagergehäuse 12 sind Räderketten angeordnet, die noch näher beschrieben werden.

Über je eine Lagereinheit 14, 16 sind in dem Lagerungsbauteil 10 die Wellen 18, 20 zweier Hydrostaten 22, 24 gelagert. Bei den Hydrostaten handelt es sich um eine Verstellpumpe 22 und einen Konstantmotor 24. Die beiden Hydrostaten 22, 24 kommunizieren miteinander auf übliche Weise über gegeneinander verschwenkbare, kurbelförmig ausgebildete Hydraulikleitungen 26, die über eine Drehdurchführung 27 miteinander in Verbindung stehen und die mittels Lagerstellen 28, 30 am Lagerungsbauteil 10 drehbar gelagert sind. Zum Verschwenken der Verstellpumpe 22 dient ein Elektromotor 32, dessen Ausgangswelle über eine Räderkette 34 an dem verschwenkbaren Teil der Hydraulikleitung 26 angreift. Zum Verschwenken kann auch eine nicht dargestellte hydrostatische Verstelleinheit verwendet werden.

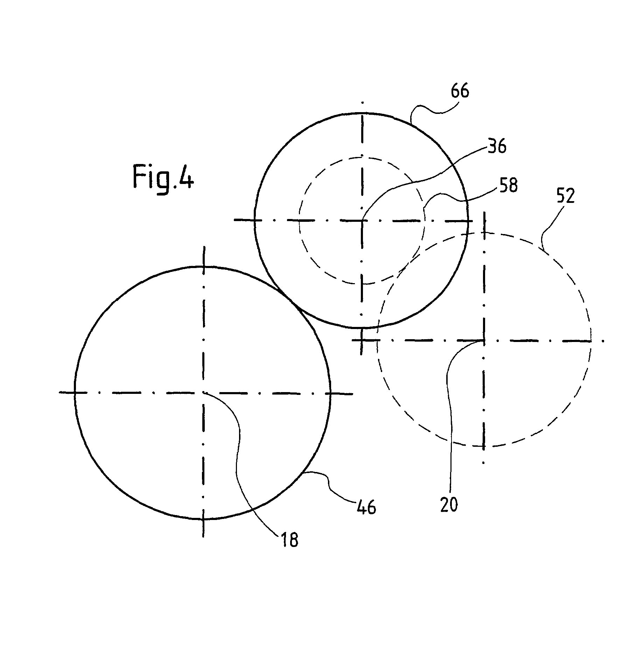

Eine Eingangswelle 36 stützt sich über eine Lagereinheit 38 am Lagerungsbauteil 10 ab. Die Eingangswelle 36 lässt sich durch einen Flansch 40 antriebsseitig mit einer nicht dargestellten Antriebsmaschine oder mit eingangsseitigen Komponenten des Antriebsstrangs verbinden. Die Wellen 18, 20 der Hydrostaten 22, 24 und die Eingangswelle 36 verlaufen parallel zueinander. Die relative Lage der Wellenachsen zueinander geht aus Fig. 4 hervor.

In einer ersten Lagereinheit 42 des Lagergehäuses 12 ist eine mechanische Ausgangswelle 44 drehbar gelagert. Bei dieser Ausgangswelle 44 kann es sich um die Verstellpumpenwelle 18 handeln. Die Ausgangswelle 44 kann jedoch auch eine mit der Verstellpumpenwelle 18 fluchtende Welle sein, die mit letzterer über einen nicht dargestellten Steckflansch formschlüssig verbunden ist. Die Ausgangswelle 44 trägt ein Pumpenzahnrad 46.

In einer zweiten Lagereinheit 48 des Lagergehäuses 12 ist eine hydraulische Ausgangswelle 50 drehbar gelagert. Bei dieser Ausgangswelle 50 kann es sich um die Konstantmotorwelle 20 handeln. Die Ausgangswelle 50 kann jedoch auch eine mit der Konstantmotorwelle 20 fluchtende Welle sein, die mit letzterer über einen nicht dargestellten Steckflansch formschlüssig verbunden ist. Die Ausgangswelle 50 trägt ein Motorzahnrad 52.

In einer dritten Lagereinheit 54 des Lagergehäuses 12 ist eine als Hohlwelle ausgebildete hydraulische Ausgangswelle 56 drehbar gelagert. Diese Ausgangshohlwelle 56 trägt ein Ausgangszahnrad 58, welches mit dem Motorzahnrad 52 kämmt und mit diesem eine Ausgangsräderkette bildet.

Innerhalb der Ausgangshohlwelle 56 ist über zwei Lagereinheiten 60, 62 eine mechanische Ausgangswelle 64 drehbar gelagert. Bei dieser Ausgangswelle 64 kann es sich um eine Verlängerung der Eingangswelle 36 handeln. Die Ausgangswelle 64 kann jedoch auch eine mit der Eingangswelle 36 fluchtende Welle sein, die mit letzterer über einen nicht dargestellten Steckflansch formschlüssig verbunden ist. Die Eingangswelle 36 trägt ein Eingangszahnrad 66, das mit dem Pumpenzahnrad 46 kämmt und mit diesem eine Eingangsräderkette bildet.

Die freien Enden der beiden mechanischen Ausgangswellen 44, 64 und der beiden hydraulischen Ausgangswellen 50, 56 weisen Steckverbindungen 45, 65, 51, 57 auf, durch die Verbindungen mit Wellen eines nicht dargestellten mechanischen Getriebemoduls hergestellt werden können.

Es sind Drehzahlsensoren 68, 70 angedeutet, die auf übliche Weise die Drehzahlen des Pumpenzahnrades 46 und des Motorzahnrades 52 erfassen und entsprechende Signale an eine nicht gezeigte Getriebesteuereinheit abgeben. Aus den erfassten Drehzahlwerten lassen sich unter Berücksichtigung der Zähneverhältnisse der Räderketten 46, 66 und 52, 58 auch die Drehzahlen der Eingangswelle 36 und der Ausgangswellen 56, 64 berechnen.

Die beschriebenen Bauelemente befinden sich in einem topfförmig ausgebildeten Getriebegehäuse 72, welches einen zylindrischen Gehäusemantel 74, einen Bodenflansch 76 und einen Ringflansch 78 aufweist. Das Lagerungsbauteil 10 stützt sich über drei auf dem Umfang gleichförmig verteilte Schwingungsdämpferelemente 80, von denen zwei dargestellt sind, am Gehäusemantel 74 ab. Über weitere Schwingungsdämpferelemente 82 stützt sich eine Lagereinheit 84 der Eingangswelle 36 an einer Öffnung des Bodenflanschs 76 ab. Bei den Schwingungsdämpferelementen handelt es sich um im Handel erhältliche Bauteile.

An der Außenseite des Bodenflansches 76 ist ein Ventilgehäuse 86 befestigt, welches das komplette Ölmanagement, inklusive Ölfilter, des nicht näher dargestellten Kraftfahrzeugs aufnimmt.

Der Leistungsfluss durch die in Fig. 1 dargestellte Hydrostateinheit verläuft wie folgt:

Die nicht dargestellte Antriebsmaschine des Kraftfahrzeugs treibt über den Flansch 40 die Eingangswelle 36 an. Diese gibt einen mechanischen Leistungsanteil unmittelbar an die Ausgangswelle 64 ab. Ein weiterer mechanischer Leistungsanteil wird über die Eingangsräderkette 66, 46 einerseits an die Verstellpumpe 22 und andererseits an die Ausgangswelle 44 abgegeben. Der durch die Verstellpumpe 22 hydraulisch angetriebene Konstantmotor 24 gibt über seine Konstantmotorwelle 20 an die Ausgangswelle 50 einen hydraulischen Leistungsanteil ab. Des weiteren gibt die Konstantmotorwelle 20 über die Ausgangsräderkette 52, 58 einen hydraulischen Leistungsanteil an die Ausgangshohlwelle 56 ab.

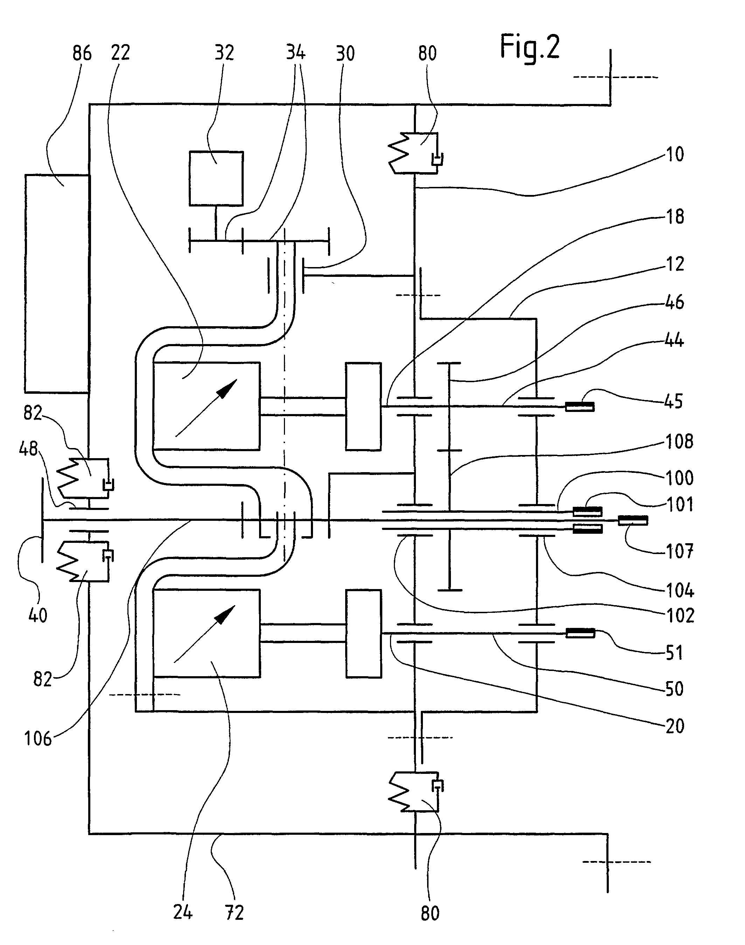

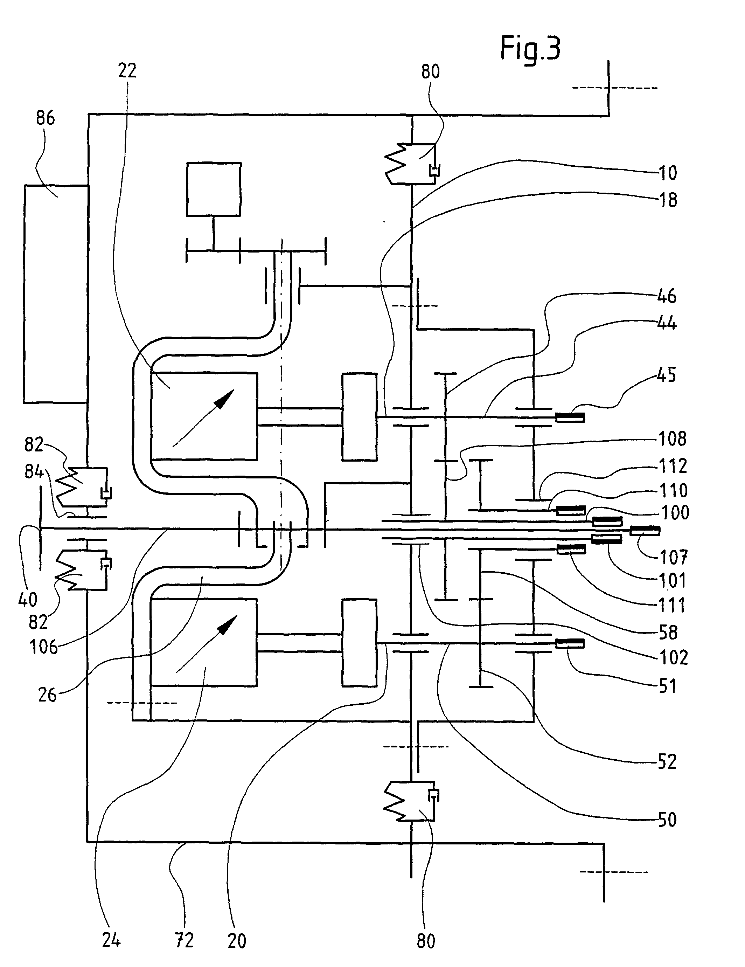

Die in den Figuren 2 und 3 dargestellten Hydrostateinrichtungen ähneln in vielen Einzelheiten der in Fig. 1 dargestellten Hydrostateinrichtung. Es wurden daher gleiche oder ähnliche Bauteile mit denselben Bezugsziffern belegt. Hier ist jedoch der Hydrostatmotor 24 nicht als Konstantmotor, wie in Fig. 1, sondern als Verstellmotor ausgebildet.

Bei der in Fig. 2 dargestellten Hydrostateinrichtung ist die Eingangswelle 100 als Hohlwelle ausgebildet, die sich über die Lagereinheit 102 am Lagerungsbauteil 10 und über die Lagereinheit 104 am Lagergehäuse 12 abstützt, und von einem nicht dargestellten mechanischen Getriebemodul angetrieben wird. Die Getriebeeingangswelle 106 verläuft durch die Hydrostateinrichtung und gibt im Gegensatz zu der in Fig. 1 dargestellten Eingangswelle 36 keine Leistung an die Hydrostateinrichtung ab. Die Getriebeeingangswelle 106 verläuft konzentrisch innerhalb der Eingangshohlwelle 100. Die Eingangshohlwelle 100 trägt drehfest ein Eingangszahnrad 108, das mit dem Pumpenzahnrad 46 kämmt und eine Eingangsräderkette bildet.

Die freien Enden der Getriebeeingangswelle 106, der Eingangshohlwelle 100, der mechanischen Ausgangswelle 44 und der hydraulischen Ausgangswelle 50 weisen Steckverbindungen 107, 101, 45, 51 auf, durch die Verbindungen mit Wellen eines nicht dargestellten mechanischen Getriebezweigs hergestellt werden können.

Der Leistungsfluss durch die in Fig. 2 dargestellte Hydrostateinheit verläuft wie folgt:

Die nicht dargestellte Antriebsmaschine des Kraftfahrzeugs treibt über den Flansch 40 die Getriebeeingangswelle 106 an, welche ohne Leistungsverzweigung durch die Hydrostateinrichtung verläuft und über die Steckverbindung 107 Leistung an einen nicht gezeigten mechanischen Getriebezweig abgibt. Eine Welle des mechanischen Getriebezweigs steht über die Steckverbindung 101 mit der Eingangswelle 100 in Verbindung und gibt über die Eingangsräderkette 108, 46 einerseits an die Verstellpumpe 22 und andererseits an die Ausgangswelle 44 Leistung ab. Der durch die Verstellpumpe 22 hydraulisch angetriebene Konstantmotor 24 gibt über seine Konstantmotorwelle 20 hydraulische Leistung an die Ausgangswelle 50 und über die Steckverbindung 51 an den nicht gezeigten mechanischen Getriebemodul ab.

Bei der in Fig. 3 dargestellten Hydrostateinrichtung sind die Getriebeeingangswelle 106 und die Eingangshohlwelle 100 ähnlich wie in Fig. 2 ausgebildet und verlaufen konzentrisch zueinander. Ein Ende der durch einen mechanischen Getriebezweig angetriebenen Eingangshohlwelle 100 stützt sich über eine Lagereinheit 102 am Lagerungsbauteil 10 ab. Die Eingangshohlwelle 100 verläuft gemäß Fig. 3 innerhalb einer hydraulischen Ausgangshohlwelle 110, die sich über die Lagereinheit 112 drehbar am Lagergehäuse 12 abstützt. Die Eingangshohlwelle 100 trägt drehfest ein Eingangszahnrad 108, das mit dem Pumpenzahnrad 46 kämmt und eine Eingangsräderkette bildet. Die Motorwelle 20 trägt ein Motorzahnrad 52, das mit einem Ausgangszahnrad 58 der hydraulischen Ausgangshohlwelle 110 kämmt und eine Ausgangsräderkette bildet.

Die freien Enden der Getriebeeingangswelle 106, der Eingangshohlwelle 100, der mechanischen Ausgangswelle 44 und beiden hydraulischen Ausgangswellen 50, 110 weisen Steckverbindungen 107, 101, 45, 51, 111 auf, durch die Verbindungen mit Wellen eines nicht dargestellten mechanischen Getriebemoduls hergestellt werden können.

Der Leistungsfluss durch die in Fig. 3 dargestellte Hydrostateinheit verläuft wie folgt:

Die nicht dargestellte Antriebsmaschine des Kraftfahrzeugs treibt über den Flansch 40 die Getriebeeingangswelle 106 an, welche ohne Leistungsverzweigung durch die Hydrostateinrichtung verläuft und Leistung an einen nicht gezeigten mechanischen Getriebezweig abgibt. Eine Welle des mechanischen Getriebezweigs steht über die Steckverbindung 101 mit der Eingangswelle 100 in Verbindung und gibt über die Eingangsräderkette 108, 46 einerseits an die Verstellpumpe 22 und andererseits an die Ausgangswelle 44 mechanische Leistung ab. Der durch die Verstellpumpe 22 hydraulisch angetriebene Konstantmotor 24 gibt über seine Konstantmotorwelle 20 einen hydraulischen Leistungsanteil an die Ausgangswelle 50 und über die Ausgangsräderkette 52, 58 hydraulische Leistung an die Ausgangshohlwelle 110 ab.

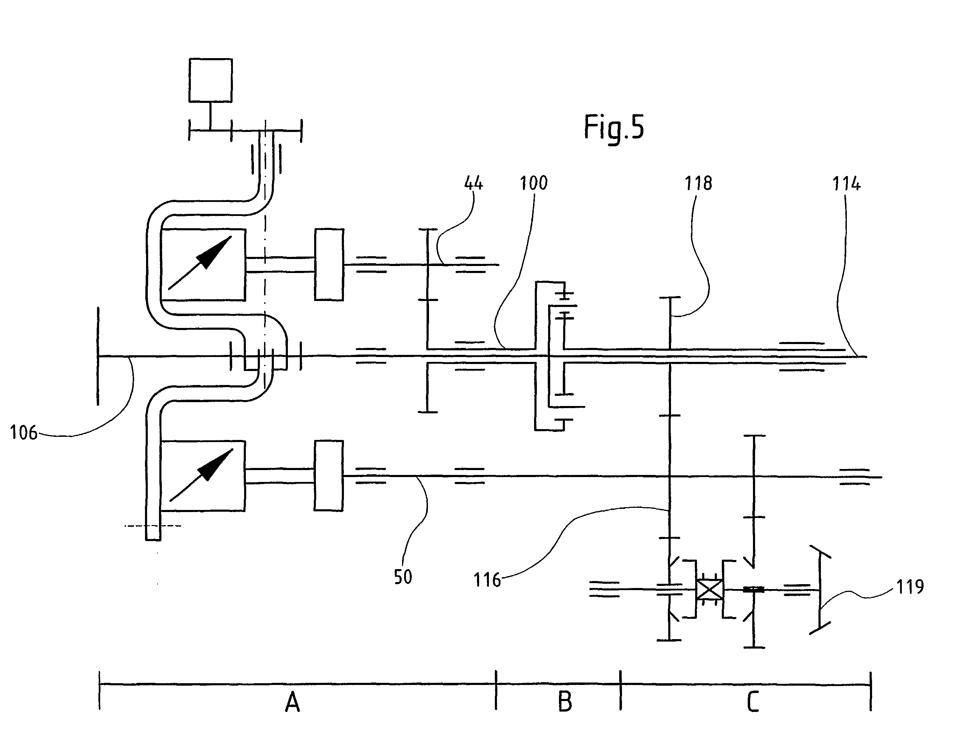

Aus Fig. 5 geht ein sogenanntes "speed split"-Getriebe hervor, welches eine gemäß Fig. 2 ausgebildete Hydrostateinrichtung A, ein an sich bekanntes Planetensummengetriebe B und ein an sich bekanntes Umschaltgetriebe C aufweist. Die durch die Hydrostateinrichtung A und das Planetensummengetriebe B verlaufende Getriebeeingangswelle 106 treibt das Planetensummengetriebe B und über den Ausgang 114 eine nicht gezeigte Zapfwelle an. Das Planetensummengetriebe B gibt über die Eingangshohlwelle 100 mechanische Leistung an die Hydrostateinrichtung A ab. Die hydraulische Ausgangswelle 50 der Hydrostateinrichtung A steht mit einem Zahnrad 116 in Verbindung, welches mit einem Ausgangszahnrad 118 des Planetensummengetriebes B kämmt und eine Summierung des mechanischen und des hydraulischen Leistungsanteils vornimmt. Durch das Umschaltgetriebe C kann auf übliche Weise zwischen zwei Gruppen umgeschaltet werden. Die Gesamtleistung des Getriebes wird über das Kegelrad 119 an ein nicht dargestelltes Differentialgetriebe ausgegeben. Die mechanische Ausgangswelle 44 der Hydrostateinrichtung A ist gemäß Fig. 5 frei. Durch sie kann ein nicht gezeigter Leistungsverbraucher des Fahrzeugs, z. B. eine Getriebeölpumpe, angetrieben werden.

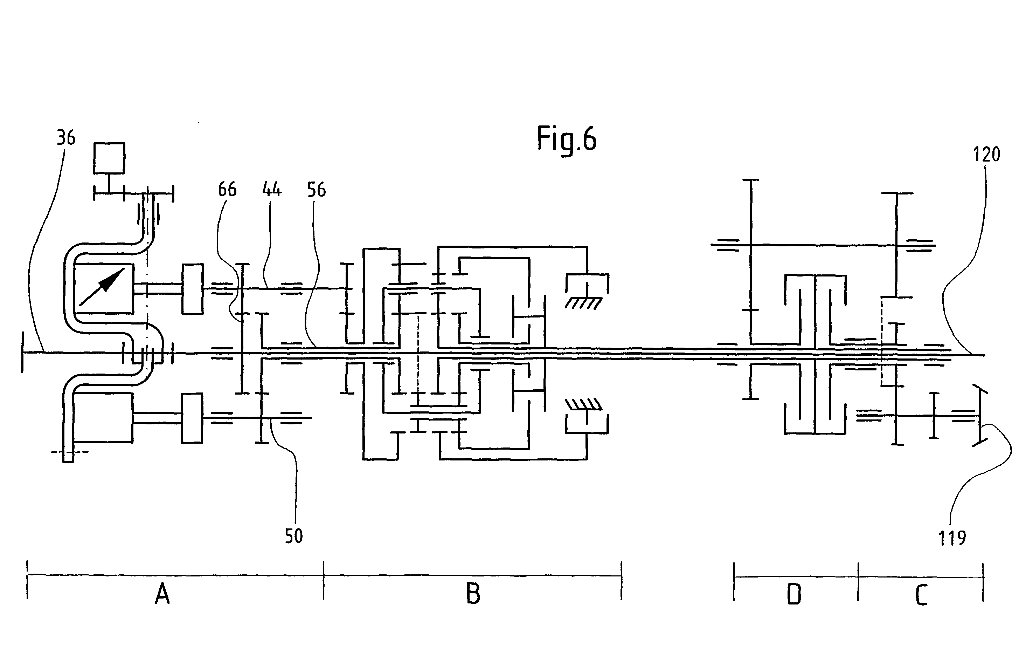

Fig. 6 zeigt ein sogenanntes "torque split"-Getriebe, welches eine gemäß Fig. 1 ausgebildete Hydrostateinrichtung A, eine Planetenwalze B, ein an sich bekanntes Umkehrgetriebe D und ein an sich bekanntes Umschaltgetriebe C aufweist. Die durch die Hydrostateinrichtung A und die Planetenwalze B verlaufende Eingangswelle 36 treibt das Eingangszahnrad 66 der Hydrostateinrichtung A und über den Ausgang 120 eine nicht gezeigte Zapfwelle an. Die Hydrostateinrichtung A gibt über die Ausgangswelle 44 mechanische Leistung und über die Ausgangshohlwelle 56 hydraulische Leistung an die Planetenwalze B ab, welche auf übliche Weise die Leistungsanteile summiert und eine Umschaltung zwischen unterschiedlichen Betriebsbereichen erlaubt. Durch das nachgeordnete Umkehrgetriebe D lässt sich eine Umschaltung zwischen Vorwärtsund Rückwärtsfahrt vornehmen. Mit dem Umschaltgetriebe C kann auf übliche Weise zwischen zwei Gruppen umgeschaltet werden. Die hydraulische Ausgangswelle 50 der Hydrostateinrichtung A ist gemäß Fig. 6 frei.

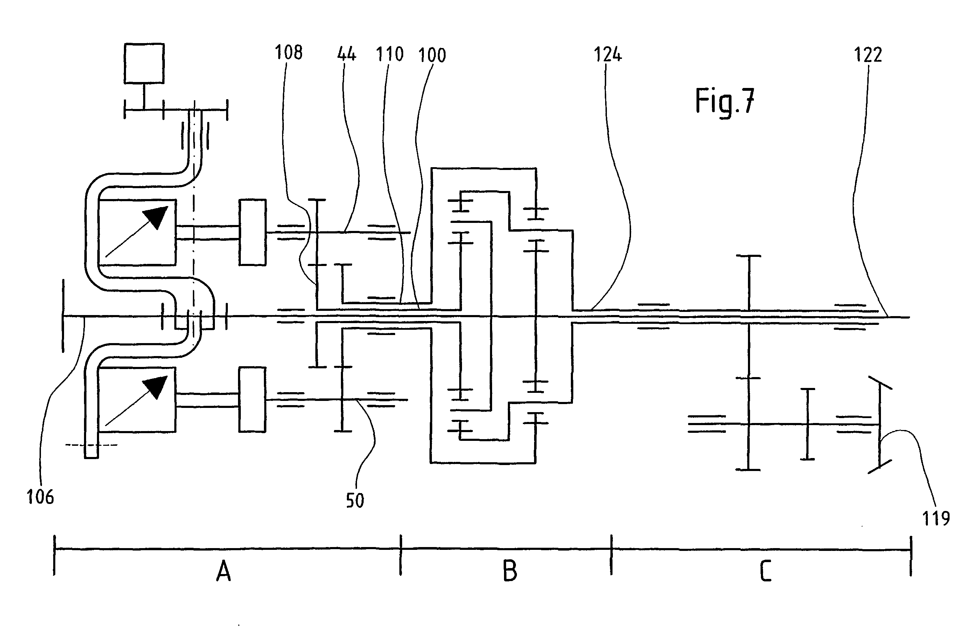

Aus Fig. 7 geht ein sogenanntes "compound"-Getriebe hervor, welches eine gemäß Fig. 3 ausgebildete Hydrostateinrichtung A, ein an sich bekanntes Planetensummengetriebe B und ein an sich bekanntes Umschaltgetriebe C aufweist. Die durch die Hydrostateinrichtung A und das Planetensummengetriebe B verlaufende Getriebeeingangswelle 106 treibt das Planetensummengetriebe B und über den Ausgang 122 eine nicht gezeigte Zapfwelle an. Das Planetensummengetriebe B gibt über die Eingangshohlwelle 100 mechanische Leistung an die Hydrostateinrichtung A ab. Die hydraulische Ausgangshohlwelle 110 der Hydrostateinrichtung A dient als hydraulische Eingangswelle für das Planetensummengetriebe B, in dem eine Summierung des mechanischen und des hydraulischen Leistungsanteils erfolgt. Das Planetensummengetriebe B gibt seine Ausgangsleistung über die Ausgangshohlwelle 124 an das Umschaltgetriebe C ab, welches auf übliche Weise zwischen zwei Gruppen umschaltbar ist. Die mechanische Ausgangswelle 44 und die hydraulische Ausgangswelle 50 der Hydrostateinrichtung A sind gemäß Fig. 7 frei. Durch sie können gegebenenfalls nicht gezeigter Leistungsverbraucher des Fahrzeugs angetrieben werden.

Die in den Fig. 1 bis 3 gezeigten Hydrostateinrichtungsvarianten weisen lediglich geringe Unterschiede auf. Durch einfache Maßnahmen ist es möglich, einen Umbau von einer Variante in eine andere Variante vorzunehmen. Hierfür ist es lediglich erforderlich das Lagergehäuse 12 mit den zugehörigen Wellen und Räderketten vom Lagerungsbauteil 10 zu lösen und entsprechend andere Wellen und Räderketten zu montieren.

## Patentansprüche

1. Hydrostateinrichtung für ein hydrostatisch-mechanisches Leistungsverzweigungsgetriebe eines landwirtschaftlichen oder industriellen Nutzfahrzeugs mit wenigstens zwei Hydrostaten (22, 24), die als hydraulisch miteinander in Verbindung stehende Verstellpumpe (22) und Hydrostatmotor (24) ausgebildet sind und parallel zueinander ausgerichtete Wellen (18, 20) aufweisen, mit einer Eingangswelle (36, 100), die mit der Welle (18) der Verstellpumpe (22) in Verbindung steht, und mit wenigstens zwei parallel zueinander ausgerichteten Ausgangswellen (44, 50, 56, 64, 110), von denen wenigstens eine Ausgangswelle (44, 64) mechanisch und wenigstens eine Ausgangswelle (50, 56, 110) hydraulisch angetrieben wird, **dadurch gekennzeichnet, dass** ein in einem Getriebegehäuse (72) montierbarer Montagerahmen (10, 12) vorgesehen ist, in dem die Wellen (18, 20) der Hydrostaten (22, 24) über Lagereinheiten (14, 16, 42, 48) drehbar gelagert sind und an dem sich die Verstelleinrichtungen der Hydrostaten (22, 24) abstützen, dass sich die Eingangswelle (36, 100) und die Ausgangswellen (44, 50, 56, 64, 100) der Hydrostateinrichtung über jeweils wenigstens eine Lagereinheit (38, 102, 104) drehbar an dem Montagerahmen (10, 12) abstützen, und dass der Montagerahmen (10, 12) mit den Hydrostaten (22, 24), der Eingangswelle (36, 100), den Ausgangswellen (44, 50, 56, 64, 110) und den Lagereinheiten (14, 16, 38, 42, 48, 54, 102, 104, 112) als vormontierbare funktionsfähige Hydrostatbaueinheit ausgebildet ist.

2. Hydrostateinrichtung nach Anspruch 1, **dadurch gekennzeichnet, dass** sich durch den Montagerahmen (10, 12) wenigstens ein Wellenabschnitt einer durch eine Antriebsmaschine angetriebenen Getriebeeingangswelle (106) erstreckt.

3. Hydrostateinrichtung nach Anspruch 1 oder 2 **dadurch gekennzeichnet, dass** die Eingangswelle (36) der Hydrostateinrichtung eine durch eine Antriebsmaschine angetriebene Getriebeeingangswelle ist oder mit der Getriebeeingangswelle fluchtet und drehfest verbunden ist.

4. Hydrostateinrichtung nach Anspruch 1 oder 2 **dadurch gekennzeichnet, dass** die Eingangswelle (100) der Hydrostateinrichtung mit einer Ausgangswelle einer gesonderten Planetengetriebebaueinheit verbindbar ist.

5. Hydrostateinrichtung nach einem der Ansprüche 1 bis 4, **dadurch gekennzeichnet, dass** die Eingangswelle der Hydrostateinrichtung als Hohlwelle (100) ausgebildet ist und konzentrisch zu einer innerhalb der Hohlwelle (100) verlaufenden durch einen Antriebsmotor angetriebenen Getriebeeingangswelle (106) angeordnet ist.

6. Hydrostateinrichtung nach einem der Ansprüche 1 bis 5, **dadurch gekennzeichnet, dass** die sich an dem Montagerahmen (10, 12) abstützende Eingangswelle (36, 100) der Hydrostateinrichtung über eine Räderkette (66, 46; 108, 46) mit der Welle (18) der Verstellpumpe (22) in Verbindung steht.

7. Hydrostateinrichtung nach einem der Ansprüche 1 bis 6, **dadurch gekennzeichnet, dass** wenigstens eine Ausgangswelle als Hohlwelle (56, 110) ausgebildet ist.

8. Hydrostateinrichtung nach einem der Ansprüche 1 bis 7, **dadurch gekennzeichnet, dass** die Eingangswellen (36, 100) und die Ausgangswellen (44, 50, 56, 64, 110) parallel zu den Wellen (18, 20) der Hydrostaten (22, 24) ausgerichtet sind und dass die Ausgangswellen (44, 50, 56, 64, 110) auf einer Seite der Hydrostateinrichtung austretend.

9. Hydrostateinrichtung nach einem der Ansprüche 1 bis 8, **dadurch gekennzeichnet, dass** wenigstens eine Ausgangswelle (64) koaxial zur Eingangswelle (36) angeordnet ist und mit dieser drehfest verbunden ist.

10. Hydrostateinrichtung nach einem der Ansprüche 1 bis 9, **dadurch gekennzeichnet, dass** eine Ausgangswelle (56, 110) koaxial zur Eingangswelle (36, 100) und gegenüber dieser verdrehbar angeordnet ist.

11. Hydrostateinrichtung nach einem der Ansprüche 1 bis 10, **dadurch gekennzeichnet, dass** die Welle (18, 20) eines Hydrostaten (22, 24) über eine Räderkette (52, 58) mit einer Ausgangswelle (56, 110) verbunden ist.

12. Hydrostateinrichtung nach einem der Ansprüche 1 bis 11, **dadurch gekennzeichnet, dass** wenigstens eine Ausgangswelle (44, 50) koaxial zu der Welle (18, 20) eines Hydrostaten (22, 24) angeordnet und drehfest mit dieser verbunden ist.

13. Hydrostateinrichtung nach einem der Ansprüche 1 bis 12, **dadurch gekennzeichnet, dass** die Eingangswelle (100) und/oder die Ausgangswellen (44, 50, 56, 64, 110) verzahnte Steckverbindungen (45, 51, 57, 65, 111) zur drehfesten Verbindung mit benachbarten Komponenten des Antriebsstrangs aufweisen.

14. Hydrostateinrichtung nach einem der Ansprüche 1 bis 13, **dadurch gekennzeichnet, dass** der Montagerahmen wenigstens ein Lagerungsbauteil (10) und ein an diesem befestigbares Lagergehäuse (12) aufweist und dass die Wellen (18, 20) der Hydrostaten (22, 24) sowie gegebenenfalls die Eingangswelle (36, 100) und/oder wenigstens eine Ausgangswelle (44, 50) sowohl in dem Montagebauteil (10) als auch in dem Lagergehäuse (12) gelagert sind.

15. Hydrostateinrichtung nach Anspruch 14, **dadurch gekennzeichnet, dass** in einem Zwischenraum zwischen dem Montagebauteil (10) und dem Lagergehäuse (12) wenigstens eine Räderkette (66, 46; 58, 52; 108, 46; 112, 46) angeordnet ist, die zur Drehmomentübertragung wenigstens die Eingangswelle (36, 100) mit der Welle (18) eines als Verstellpumpe (22) ausgebildeten Hydrostaten verbindet und/oder die zur Drehmomentübertragung wenigstens eine Ausgangswelle (56, 110) mit der Welle (20) eines als Hydromotor (24) ausgebildeten Hydrostaten verbindet.

16. Hydrostateinrichtung nach einem der Ansprüche 1 bis 15, **dadurch gekennzeichnet, dass** Drehzahlsensoren (68, 70) zur unmittelbaren oder mittelbaren Erfassung der Drehzahlen der Eingangswelle (36, 100) bzw. wenigstens einer Ausgangswelle (44, 50, 56, 110) vorgesehen sind.

17. Hydrostateinrichtung nach einem der Ansprüche 1 bis 16, **dadurch gekennzeichnet, dass** ein Getriebegehäuse (72) vorgesehen ist, in welchem der Montagerahmen (10, 12) und gegebenenfalls eine Lagereinheit (84) der Eingangswelle (36) und/oder eine Lagereinheit (84) einer Getriebeeingangswelle (106) und/oder eine Lagereinheit wenigstens einer Ausgangswelle der Hydrostateinrichtung schwingungsdämpfend angeordnet sind.

18. Hydrostateinrichtung nach einem der Ansprüche 1 bis 17, **dadurch gekennzeichnet, dass** der Montagerahmen (10, 12) in einem im wesentlichen hutförmig ausgebildeten, zu einer Seite offenen Getriebegehäuse (72) montiert ist, wobei die Getriebeeingangswelle (36, 106) im Bodenflansch (76) des hutförmigen Getriebegehäuses (72) gelagert ist und die freien Enden (45, 51, 57, 65, 111) der Ausgangswellen (44, 50, 56, 64, 110) auf der offenen Seite liegen.

19. Hydrostateinrichtung nach Anspruch 17 oder 18, **dadurch gekennzeichnet, dass** sich das Getriebegehäuse (72) gegenüber benachbarten Bauteilen abdichten lässt, und dass ein eigener Hydraulikkreislauf für die in dem Getriebegehäuse (72) angeordneten Komponenten vorgesehen ist.

20. Hydrostateinrichtung nach einem der Ansprüche 17 bis 19, **dadurch gekennzeichnet, dass** eine Hydraulikversorgung, gegebenenfalls mit Pumpe, Flüssigkeitsfilter und Kühler, vorgesehen ist, die an dem Montagerahmen (10, 12) oder dem Getriebegehäuse (72) befestigbar oder in dieses integrierbar ist und die der Aufrechterhaltung eines Flüssigkeitskreislaufs in dem Getriebegehäuse dient.

21. Hydrostateinrichtung nach einem der Ansprüche 1 bis 20, **dadurch gekennzeichnet, dass** wenigstens eine die Hydrostaten (22, 24) verbindende Hydraulikleitung (26) kurbelförmig am Montagerahmen (10, 12) gelagert ist und eine Drehdurchführung (27) enthält.

## Claims

1. A hydrostatic device for a hydrostatic-mechanical power splitting transmission of an agricultural or industrial utility vehicle with at least two hydrostatic units (22, 24) which are formed as a variable displacement pump (22) and a hydrostatic motor (24) in hydraulic communication with one another and have shafts (18, 20) aligned parallel to one another, with an input shaft (36, 100) which is coupled to the shaft (18) of the variable displacement pump (22), and with at least two output shafts (44, 50, 56, 64, 110) aligned parallel to one another, of which at least one output shaft (44, 64) is driven mechanically and at least one output shaft (50, 56, 110) is driven hydraulically, **characterized in that** a mounting frame (10, 12) which can be mounted in a transmission housing (72) is provided, in which the shafts (18, 20) of the hydrostatic units (22, 24) are rotatably mounted by means of bearing units (14, 16, 42, 48) and on which the adjusting devices of the hydrostatic units (22, 24) are supported, **in that** the input shaft (36, 100) and the output shafts (44, 50, 56, 64, 110) of the hydrostatic device are supported rotatably on the mounting frame (10, 12) by at least one bearing unit (38, 102, 104) in each case, and **in that** the mounting frame (10, 12) with the hydrostatic units (22, 24), the input shaft (36, 100), the output shafts (44, 40, 56, 64, 110) and the bearing units (14, 16, 38, 42, 48, 54, 102, 104, 112) is in the form of a functioning hydrostatic assembly which can be pre-assembled.

2. A hydrostatic device according to claim 1, **characterized in that** at least a shaft section of a transmission input shaft (106) driven by a drive machine extends through the mounting frame (10, 12).

3. A hydrostatic device according to claim 1 or 2, **characterized in that** the input shaft (36) of the hydrostatic device is a transmission input shaft driven by a drive machine or is aligned with and rotationally fast with the transmission input shaft.

4. A hydrostatic device according to claim 1 or 2, **characterized in that** the input shaft (100) of the hydrostatic device can be connected to an output shaft of a separate planetary gear unit.

5. A hydrostatic device according to any of claims 1 to 4, **characterized in that** the input shaft of the hydrostatic device is in the form of a hollow shaft (100) and is concentric with a transmission input shaft (106) running within the hollow shaft (100) and driven by a drive engine.

6. A hydrostatic device according to any of claims 1 to 5, **characterized in that** the input shaft (36, 100) of the hydrostatic device supported on the mounting frame (10, 12) is coupled to the shaft (18) of the variable displacement pump (22) by a gear train (66, 46; 108, 46).

7. A hydrostatic device according to any of claims 1 to 6, **characterized in that** at least one output shaft is in the form of a hollow shaft (56, 110).

8. A hydrostatic device according to any of claims 1 to 7, **characterized in that** the input shafts (36, 100) and the output shafts (44, 50, 56, 64, 110) are aligned parallel to the shafts (18, 20) of the hydrostatic units (22, 24) and **in that** the output shafts (44, 50, 56, 64, 110) emerge on one side of the hydrostatic device.

9. A hydrostatic device according to any of claims 1 to 8, **characterized in that** at least one output shaft (64) is arranged coaxial with the input shaft (36) and is connected rotationally fast therewith.

10. A hydrostatic device according to any of claims 1 to 9, **characterized in that** one output shaft (56, 110) is coaxial with the input shaft (36, 100) and is rotatably arranged relative thereto.

11. A hydrostatic device according to any of claims 1 to 10, **characterized in that** the shaft (18, 20) of a hydrostatic unit (22, 24) is connected to an output shaft (56, 110) via a gear train (52, 58).

12. A hydrostatic device according to any of claims 1 to 11, **characterized in that** at least one output shaft (44, 50) is coaxial with the shaft (18, 20) of a hydrostatic unit (22, 24) and is connected rotationally fast therewith.

13. A hydrostatic device according to any of claims 1 to 12, **characterized in that** the input shaft (100) and/or the output shafts (44, 50, 56, 64, 110) have splined plug-in connections (45, 51, 57, 65, 111) for rotationally fast connection to neighbouring components of the drive train.

14. A hydrostatic device according to any of claims 1 to 13, **characterized in that** the mounting frame comprises at least one bearing component (10) and a bearing housing (12) which can be fixed thereto, and **in that** the shafts (18, 20) of the hydrostatic units (22, 24), optionally as well as the input shaft (36, 100) and/or at least one output shaft (44, 50) are mounted both in the mounting component (10) and the bearing housing (12).

15. A hydrostatic device according to claim 14, **characterized in that** at least one gear train (66, 46; 58, 52; 108, 46; 112, 46) is arranged in a space between the mounting component (10) and the bearing housing (12) and couples at least the input shaft (36, 100) for torque transmission to the shaft (18) of a hydrostatic unit in the form of a variable displacement pump (22) and/or couples at least one output shaft (56, 110) for torque transmission to the shaft (20) of a hydrostatic unit in the form of a hydrostatic motor (24).

16. A hydrostatic device according to any of claims 1 to 15, **characterized in that** speed of rotation sensors (68, 70) are provided for detecting directly or indirectly the speeds of rotation of the input shaft (36, 100) and at least one output shaft (44, 50, 56, 110).

17. A hydrostatic device according to any of claims 1 to 16, **characterized in that** there is provided a transmission housing (72) in which the mounting frame (10, 12) and optionally a bearing unit (84) of the input shaft (36) and/or a bearing unit (84) of a transmission input shaft (106) and/or a bearing unit of at least one output shaft of the hydrostatic device are arranged with vibration damping.

18. A hydrostatic device according to any of claims 1 to 17, **characterized in that** the mounting frame (10, 12) is mounted in a transmission housing (72) essentially of hat form and open to one side, wherein the transmission input shaft (36, 106) is mounted in the bottom flange (76) of the hat formed transmission housing (72) and the free ends (45, 51, 57, 65, 111) of the output shafts (44, 50, 56, 64, 110) lie on the open side.

19. A hydrostatic device according to claim 17 or 18, **characterized in that** the transmission housing (72) can be sealed relative to adjacent components and **in that** a separate hydraulic circuit is provided for the components arranged in the transmission housing (72).

20. A hydrostatic device according to any of claims 17 to 19, **characterized in that** a hydraulic supply, if desired with a pump, fluid filter and cooler, is provided and can be fixed to the mounting frame (10, 12) or the transmission housing (72) or be integrated therein and serves to maintain a fluid circuit in the transmission housing.

21. A hydrostatic device according to any of claims 1 to 20, **characterized in that** at least one hydraulic line (26) connecting the hydrostatic units (22, 24) is mounted in cranked form on the mounting frame (10, 12) and includes a rotary feed-through (27).

## Revendications

1. Système hydrostatique pour un engrenage de dérivation de puissance hydrostatique-mécanique d'un véhicule utilitaire agricole ou industriel, comportant au moins deux hydrostats (22, 24), qui sont constitués par une pompe à débit variable (22) et un moteur hydrostatique (24) reliés hydrauliquement l'un à l'autre et présentant des arbres parallèles (18, 20) l'un par rapport à l'autre, avec un arbre d'entrée (36, 100) relié à l'arbre (18) de la pompe à débit variable (22), et avec au moins deux arbres de sortie (44, 50, 56, 64, 110) orientés parallèlement l'un à l'autre, dont au moins un arbre de sortie (44, 64) est entraîné mécaniquement et au moins un arbre de sortie (50, 56, 110) est entraîné hydrauliquement, **caractérisé en ce qu'**il est prévu un cadre de montage (10, 12) pouvant être monté dans un carter d'engrenages (72), dans le cadre de montage (10, 12) les arbres (18, 20) des hydrostats (22, 24) étant installés rotatifs sur des paliers (14, 16, 42, 48) et sur lequel s'appuient les systèmes de réglage des hydrostats (22, 24), **en ce que** l'arbre d'entrée (36, 100) et les arbres de sortie (44, 50, 56, 64, 110) du système hydrostatique s'appuient de façon rotative chacun avec au moins un palier (38, 102, 104) sur le cadre de montage (10, 12), et **en ce que** le cadre de montage (10, 12) avec les hydrostats (22, 24), l'arbre d'entrée (36, 100), les arbres de sortie (44, 50, 56, 64, 110) et les paliers (14, 16, 38, 42, 48, 54, 102, 104, 112) sont constitués sous forme d'unités structurales hydrostatiques opérationnelles prémontables.

2. Système hydrostatique selon la revendication 1, **caractérisé en ce que**, à travers le cadre de montage (10, 12) s'étend au moins une section d'arbre d'un arbre menant d'un carter d'engrenages (106), entraîné par une machine d'entraînement.

3. Système hydrostatique selon la revendication 1 ou 2, **caractérisé en ce que** l'arbre d'entrée (36) du système hydrostatique est un arbre menant d'un carter d'engrenages entraîné par une machine d'entraînement, ou est relié aligné et solidaire en rotation avec l'arbre menant du carter d'engrenages.

4. Système hydrostatique selon la revendication 1 ou 2, **caractérisé en ce que** l'arbre d'entrée (100) du système hydrostatique peut être relié avec l'arbre de sortie de l'unité structurale à train planétaire séparé.

5. Système hydrostatique selon l'une quelconque des revendications 1 à 4, **caractérisé en ce que** l'arbre d'entrée du système hydrostatique est constitué par un arbre creux (100) et est disposé concentriquement à un arbre menant d'un carter d'engrenages (106) tournant à l'intérieur de l'arbre creux (100) et entraîné par un moteur d'entraînement.

6. Système hydrostatique selon l'une quelconque des revendications 1 à 5, **caractérisé en ce que** l'arbre d'entrée (36, 100) prenant appui sur le cadre de montage (10, 12) du système hydrostatique est relié par un entraînement à chaîne (66, 46 ; 108, 46) à l'arbre (18) de la pompe à débit variable (22).

7. Système hydrostatique selon l'une quelconque des revendications 1 à 6, **caractérisé en ce qu'**au moins un arbre de sortie consiste en un arbre creux (56, 110).

8. Système hydrostatique selon l'une quelconque des revendications 1 à 7, **caractérisé en ce que** les arbres d'entrée (36, 100) et les arbres de sortie (44, 50, 56, 64, 110) sont orientés parallèlement aux arbres (18, 20) des hydrostats (22, 24), et **en ce que** les arbres de sortie (44, 50, 56, 64, 110) ressortent sur un côté du système hydrostatique.

9. Système hydrostatique selon l'une quelconque des revendications 1 à 8, **caractérisé en ce qu'**au moins un arbre de sortie (64) est disposé coaxialement à l'arbre d'entrée (36) et lui est réuni solidaire en rotation.

10. Système hydrostatique selon l'une quelconque des revendications 1 à 9, **caractérisé en ce qu'**un arbre de sortie (56, 110) est disposé coaxialement à l'arbre d'entrée (36, 100) et peut tourner par rapport à ce dernier.

11. Système hydrostatique selon l'une quelconque des revendications 1 à 10, caractérisé en ce l'arbre (18, 20) d'un hydrostat (22, 24) est relié à un arbre de sortie (56, 110) par une liaison à chaîne (52, 58).

12. Système hydrostatique selon l'une quelconque des revendications 1 à 11, **caractérisé en ce qu'**au moins un arbre de sortie (44, 50) est disposé coaxialement à l'arbre (18, 20) d'un hydrostat (22, 24) et lui est réuni solidaire en rotation.

13. Système hydrostatique selon l'une quelconque des revendications 1 à 12, caractérisé en ce l'arbre d'entrée (100) et/ou des arbres de sortie (44, 50, 56, 64, 110) présentent des moyens dentés de réunion par enfoncement (45, 51, 57, 65, 111) en vue de la réunion solidaire en rotation avec des composants voisins du train d'entraînement.

14. Système hydrostatique selon l'une quelconque des revendications 1 à 13, **caractérisé en ce que** le cadre de montage présente au moins un élément de palier (10) et un carter de palier (12) pouvant lui être fixé et **en ce que** les arbres (18, 20) des hydrostats (22, 24) ainsi que, le cas échéant, l'arbre d'entrée (36, 100) et/ou au moins un arbre de sortie (44, 50) sont supportés aussi bien dans le cadre de montage (10) que dans le carter de palier (12).

15. Système hydrostatique selon la revendication 14, **caractérisé en ce que** dans un espace intermédiaire entre l'élément de montage (10) et le carter de palier (12) est disposée au moins une liaison par chaîne (66, 46 ; 58, 52 ; 108, 46 ; 112, 46) qui, pour le transfert du moment de rotation, relie au moins l'arbre d'entrée (36, 100) avec l'arbre (18) d'un hydrostat constituant une pompe à débit variable (22) et/ou qui, pour le transfert du moment de rotation, relie au moins un arbre de sortie (56, 100) avec l'arbre (20) d'un hydrostat constituant un hydromoteur (24).

16. Système hydrostatique selon l'une quelconque des revendications 1 à 15, **caractérisé en ce qu'**il est prévu des détecteurs de vitesse de rotation (68, 70) destinés à la détermination directe ou indirecte de la vitesse de rotation de l'arbre d'entrée (36, 100) ou d'au moins un arbre de sortie (44, 50, 56, 110).

17. Système hydrostatique selon l'une quelconque des revendications 1 à 16, **caractérisé en ce qu'**il est prévu un carter d'engrenages (72) dans lequel est disposé le cadre de montage (10, 12) et le cas échéant un palier (84) pour l'arbre d'entrée (36) et/ou un palier (84) pour un arbre menant (106) et/ou un palier pour au moins un arbre de sortie, amortissant les vibrations du système hydrostatique.

18. Système hydrostatique selon l'une quelconque des revendications 1 à 17, **caractérisé en ce que** le cadre de montage (10, 12) réalisé pratiquement en forme de chapeau est monté dans un carter d'engrenages (72) ouvert sur un côté, l'arbre menant du carter d'engrenages (36, 106) étant logé dans le fond (76) du carter d'engrenages en forme de chapeau (72) et les extrémités libres (45, 51, 57, 65, 111) des arbres de sortie (44, 50, 56, 64, 110) étant situés sur le côté ouvert.

19. Système hydrostatique selon la revendication 17 ou 18, **caractérisé en ce que** le carter d'engrenages (72) est rendu étanche vis-à-vis des éléments structuraux voisins, et **en ce qu'**il est prévu un circuit hydraulique propre pour les composants situés dans le carter d'engrenages (72).

20. Système hydrostatique selon l'une des revendications 17 à 19, **caractérisé en ce qu'**il est prévu une source d'énergie hydraulique, le cas échéant avec pompe, filtre à liquide et refroidisseur, qui peut être fixée au cadre de montage (10, 12) ou au carter d'engrenages (72) ou qui peut être intégrée dans ce dernier, et qui sert au maintien d'un cycle de circulation de liquide dans le carter d'engrenages.

21. Système hydrostatique selon l'une quelconque des revendications 1 à 20, **caractérisé en ce qu'**au moins une conduite hydraulique (26) en forme de manivelle réunissant les hydrostats (22, 24) est montée sur le cadre de montage (10, 12) et comporte un passage rotatif (27).
